# EUROPÄISCHE PATENTSCHRIFT

(11) **EP 2 803 105 B1**
(45) Veröffentlichungstag und Bekanntmachung des Hinweises auf die Patenterteilung: **20.04.2016**
(21) Anmeldenummer: 12810087.2
(22) Anmeldetag: 15.12.2012
(51) Int. Cl.: H01M 8/24

(54) **BRENNSTOFFZELLENSTAPEL**
FUEL CELL STACK
EMPILAGE DE PILES À COMBUSTIBLE

(30) Priorität: 10.01.2012 DE 102012000264
(43) Veröffentlichungstag der Anmeldung: 19.11.2014
(73) Patentinhaber: Daimler AG, 70327 Stuttgart (DE)
(72) Erfinder: STARK, Holger, 71573 Allmersbach im Tal (DE); MEX, Ulf-Michael, 14199 Berlin (DE)
(74) Vertreter: JENSEN & SON
(86) Internationale Anmeldenummer: PCT/EP2012/005180
(87) Internationale Veröffentlichungsnummer: WO 2013/104396

(56) Entgegenhaltungen:
- EP-A1- 1 394 883
- DE-A1-102008 051 181
- JP-A- 2003 323 902
- JP-A- 2009 170 169

## Beschreibung

Die Erfindung betrifft einen Brennstoffzellenstapel gemäß dem Oberbegriff des Patentanspruchs 1.

Brennstoffzelleneinheiten wandeln chemische Energie in elektrische Energie um. Üblicherweise besteht eine Brennstoffzelleneinheit aus einer Membran-Elektroden-Einheit, welche insbesondere eine protonenleitfähige Membran, als Elektroden in Form von Gasdiffusionselektroden eine Anode und eine Kathode aufweist, wobei die Membran zwischen der Anode und der Kathode angeordnet ist, und wobei die Membran-Elektroden-Einheit zwischen zwei Bipolarplatten angeordnet ist, und wobei eine Bipolarplatte jeweils zwischen zwei benachbarten Brennstoffzelleneinheiten angeordnet ist.

Da eine von einer einzelnen Brennstoffzelleneinheit erzeugbare Spannung verhältnismäßig klein ist, werden üblicherweise mehrere Brennstoffzelleneinheiten miteinander gekoppelt, in dem diese als ein Brennstoffzellenstapel zusammengefasst werden. Die gestapelten Brennstoffzelleneinheiten werden im Allgemeinen in einem Gehäuse angeordnet, wobei dieses bevorzugt zwischen Endplatten des Brennstoffzellenstapels angeordnet ist. Zusätzlich ist bei dieser Anordnung mindestens eine Seite der Endplatten derart zugänglich, dass eine kraftschlüssige Verbindung mit einem Halter oder Tragrahmen, z.B. Fahrzeugkarosserie, hergestellt werden kann. Die Höhe eines Brennstoffzellenstapels mit einer vorgegebenen Anzahl von Brennstoffzelleneinheiten kann bedingt durch Dickentoleranzen z.B. der Bipolarplatten, der Membran-Elektroden-Einheiten und/oder Dichtungen variieren. Hierbei bewegen sich die Dickenabweichungen der einzelnen Bauteile beispielsweise im Bereich von wenigen hundertstel Millimetern bis hin zu zehntel Millimetern. Da sich die Einzeltoleranzen der Komponenten aufsummieren, kann die Höhe des Brennstoffzellenstapels z.B. mit mehreren hundert Brennstoffizelleneinheiten deutlich von einer Sollhöhe abweichen. Beispielsweise sind dabei Toleranzen im Bereich von +/- 5 Millimeter, in Einzelfällen auch +/-17 Millimeter bekannt. Daraus folgt, dass eine Höhe jeden Gehäuses individuell an die Höhe des Brennstoffzellenstapels angepasst werden muss.

Zur Lösung des Problems werden beispielsweise eine Vielzahl an Gehäusen mit unterschiedlicher Höhe vorproduziert und ein entsprechend passendes Gehäuse in den Produktionsprozess eingesteuert, sobald die Höhe des entsprechenden Brennstoffzellenstapels bekannt ist.

In der JP 2009170169 A ist ein Brennstoffzellenstapel offenbart, welcher in einem Gehäuse angeordnet ist. Das Gehäuse weist an seinen Längsseiten ein Abdeckelement auf und ist an einer Stirnseite mit einer Endplatte abgeschlossen. Das Abdeckelement und die Endplatte verlaufen dabei abschnittsweise parallel, wobei in dem parallel verlaufenden Abschnitt eine Dichtung angeordnet ist.

Aus der JP 2003323902 A ist ein Rahmenelement bekannt, welches auf einem Stapelabschlusselement und einem Gehäuse stirnseitig angeordnet ist. Das Rahmenelement dient der elektrischen Verschaltung der einzelnen Brennstoffzelleneinheiten. Es sind keine Dichtungen im Bereich des Rahmenelements gezeigt.

DE 102008051181 A1 wird als nächstliegender Stand der Technik angesehen. Dort wird ein Brennstoffzellenstapel offenbart, welcher aus einer Mehrzahl von gestapelten Brennstoffzelleneinheiten und zumindest einem Stapelabschlusselement gebildet ist. Die gestapelten Brennstaffzelleneinheiten sind von einem Gehäuse umschlossen. Zwischen dem Stapelabschlusselement und dem Gehäuse ist eine Dichtung angeordnet.

Der Erfindung liegt die Aufgabe zugrunde, ein gegenüber dem Stand der Technik verbesserten Brennstoffzellenstapel anzugeben.

Die Aufgabe wird erfindungsgemäß gelöst durch einen Brennstoffzellenstapel, welcher die in Anspruch 1 angegebenen Merkmale aufweist.

Vorteilhafte Ausgestaltungen der Erfindung sind Gegenstand der Unteransprüche.

Ein Brennstoffzellenstapel ist aus einer Mehrzahl von gestapelten Brennstoffzelleneinheiten und zumindest einem Stapelabschlusselement gebildet, wobei die gestapelten Brennstoffzelleneinheiten von einem Gehäuse umschlossen sind. Erfindungsgemäß ist ein Rahmenelement auf das zumindest ein Stapelabschlusselement und das Gehäuse stirnseitig angeordnet, wobei zumindest zwischen dem Stapelabschlusselement und dem Gehäuse im Bereich des Rahmenelements wenigstens eine Dichtung angeordnet ist.

Die Höhe des Brennstoffzellenstapels kann wie bereits eingangs beschrieben durch Dickentoleranzen z.B. der Bipolarplatten, der Membran-Elektroden-Einheiten und/oder der Dichtungen variieren. Mittels des Rahmenelements sind in vorteilhafter Art und Weise derartige Höhenunterschiede ausgleichbar. Das Rahmenelement umgreift dazu das Stapelabschlusselement und das Gehäuse stirnseitig, so dass mittels der wenigstens einen Dichtung eine Dichtheit zwischen Gehäuse und dem Stapelabschlusselement auch bei großen Höhentoleranzen sichergestellt ist. Vorzugsweise sind somit Gehäuse mit standardisierten Höhen verwendbar, so dass ein Montageaufwand kosten- und zeiteffizient gestaltet werden kann.

Das Rahmenelement ist zweckmäßigerweise auf einer Stirnseite des Stapelabschlusselements und einer Stirnseite des Gehäuses form-, kraft- und/oder stoffschlüssig befestigt. Vorzugsweise ist das Rahmenelement formschlüssig der Stirnseite des Stapelabschlusselements und des Gehäuses aufgesetzt, wobei der Formschluss durch entsprechende Verklebungen und/oder Verschraubungen unterstützt wird, so dass eine mechanisch stabile Verbindung zwischen dem Rahmenelement und dem Stapelabschlusselement sowie dem Gehäuse sichergestellt ist.

In einer möglichen Ausführungsform ist die Stirnseite des Stapelabschlusselements durch einen umlaufenden abgewinkelten Rand des Stapelabschlusselements gebildet, wobei die Stirnseite des Stapelabschlusselements parallel zur Stirnseite des Gehäuses und in Stapelrichtung verläuft. Mittels des abgewinkelten Rands des Stapelabschlusselements ist in vorteilhafter Art und Weise eine Biege- und Verwindungssteifigkeit des Stapelabschlusselements erhöht.

Für einen optimalen Formschluss mit der Stirnseite des Stapelabschlusselements und des Gehäuses weist das Rahmenelement in einer möglichen Ausführungsform ein U-förmiges Profil auf, wobei eine Länge der Schenkel des U-förmigen Profils mit einer Länge der abgewinkelten Stirnseite des Stapelabschlusselements korrespondiert, so dass das Rahmenelement die Stirnseite des Stapelabschlusselements umgreift.

In einer ersten Ausgestaltung der Erfindung sind zwischen den Schenkeln zwei parallel zueinander angeordnete Dichtungen angeordnet, welche jeweils ein U-förmiges Profil aufweisen, wobei eine der Dichtungen die Stirnseite des Stapelabschlusselements und die andere der Dichtungen die Stirnseite des Gehäuses umschließt. Damit sind ein Formschluss und eine Abdichtung des Stapelabschlusselements gegenüber dem Gehäuse in vorteilhafter Art und Weise möglich. Die Dichtungen sind vorzugsweise an die Innenflächen des Rahmenelements angespritzt und damit in einfacher Art und Weise herstellbar.

Besonders bevorzugt ist das U-förmige Profil einer der Dichtungen korrespondierend zu einer Form und/oder äußeren Abmessungen der Stirnseite des Stapelabschlusselements und das U-förmige Profil der anderen Dichtung korrespondierend zu äußeren Abmessungen der Stirnseite des Gehäuses ausgebildet. Die Dichtung zur Aufnahme der Stirnseite des Gehäuses ist dabei derart ausgeformt, dass diese Stirnseiten von Gehäusen mit unterschiedlicher Höhe eines vorbestimmbaren Höhenbereichs aufnehmen können.

In einer zweiten Ausgestaltung der Erfindung ist die in Richtung des Gehäuses weisende Oberflächenseite der Stirnseite des Stapelabschlusselements mit einer Dichtung versehen. Die Dichtung ist beispielsweise aus einer Mehrzahl von Lippendichtungen gebildet. Beim Anordnen des Gehäuses an dem Brennstoffzellenstapel, d.h. beim Aufschieben des Gehäuses in Stapelrichtung, wird somit bereits eine gute Dichtwirkung erzielt. Das Rahmenelement ist dabei zur Verbesserung eines daraus resultierenden Anpressdrucks auf den Stirnseiten des Stapelabschlusselements und des Gehäuses angeordnet und wirkt damit als Klemmrahmen.

Vorzugsweise weist die Dichtung Aussparungen zur Aufnahme einer Spannvorrichtung auf, wobei die Spannvorrichtung zumindest im Bereich der Aussparungen elektrisch isoliert ist. Die beispielsweise als Lippendichtungen ausgebildete Dichtung und die elektrisch isolierte Spannvorrichtung wirken in vorteilhafter Art und Weise dichtend zusammen und verhindern somit ein Eindringen von Feuchtigkeit in den Bereich zwischen Brennstoffzellenstapel und Gehäuse. Die Kombination von Spannvorrichtung zum Verspannen des Brennstoffzellenstapels und Abdichtung des Stapelabschlusselements gegenüber dem Gehäuse ermöglicht weiterhin eine einfache und kostengünstige Herstellung eines Dichtsystems für den Brennstoffzellenstapel und zudem eine Bauraumeinsparung. Zur elektrischen Isolierung der Spannvorrichtung ist dabei an diese eine Isolierung angeformt, vorzugsweise angespritzt, z.B. mittels eines Spritzgussverfahrens.

Zur Optimierung der Dichtwirkung der Dichtungen sind diese aus einem Kautschuk, einem Schaumstoff, Polyvinylchlorid, thermoplastischen Polyurethan und/oder einem thermoplastischen Polymer gebildet. Diese elektrisch isolierenden Werkstoffe zeichnen sich durch eine hohe chemische Beständigkeit, Temperaturbeständigkeit und gute Korrosionseigenschaften aus.

Ausführungsbeispiele der Erfindung werden im Folgenden anhand von Zeichnungen näher erläutert.

Dabei zeigen:
- Fig. 1: schematisch eine Schnittdarstellung eines Ausschnitts aus einem erfindungsgemäßen Brennstoffzellenstapel in einem ersten Ausführungsbeispiel, und
- Fig. 2: schematisch eine Schnittdarstellung eines Ausschnitts aus einem erfindungsgemäßen Brennstoffzellenstapel in einem zweiten Ausführungsbeispiel.

Einander entsprechende Teile sind in allen Figuren mit den gleichen Bezugszeichen versehen.

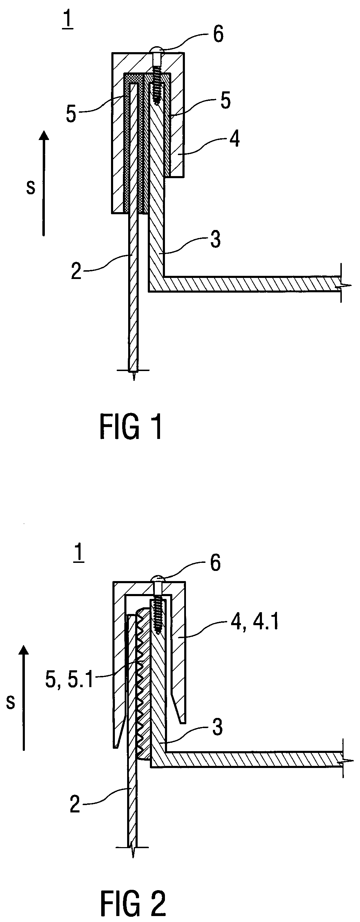

Figur 1 zeigt einen Ausschnitt aus einem erfindungsgemäßen Brennstoffzellenstapel 1 in einem ersten Ausführungsbeispiel, wobei der Brennstoffzellenstapel 1 ein Gehäuse 2, ein Stapelabschlusselement 3 und ein Rahmenelement 4 aufweist.

Der Brennstoffzellenstapel 1 besteht aus einer Mehrzahl von nicht näher dargestellten gestapelten Brennstoffzelleneinheiten, welche in dem Gehäuse 2 angeordnet sind und welche beispielsweise als Hochtemperatur-Brennstoffzelleneinheiten, z.B. Festoxidbrennstoffzellen, oder auch Niedertemperatur-Brennstoffzelleneinheiten, beispielsweise Polymerelektrolytbrennstoffzellen, ausgebildet sind, wobei Polymerelektrolytbrennstoffzellen (PEMFC) bevorzugt sind.

Das Gehäuse 2 ist beispielsweise als einseitig offenes Gehäuse 2 ausgebildet und umschließt die gestapelten Brennstoffzelleneinheiten. Idealerweise schließt das Gehäuse 2 mit seinem offenen Ende an ein Ende oder eine Oberflächenseite des Stapelabschlusselements 3 an, welches den Brennstoffzellenstapel 1 stirnseitig begrenzt.

Da eine Höhe des Brennstoffzellenstapels 1 üblicherweise durch Dickentoleranzen von in den Brennstoffzelleneinheit angeordneten Bipolarplatten, Membran-Elektroden-Einheiten und/oder Dichtungen 5 variiert, kann das Gehäuse 2 einen Abschnitt einer Oberflächenseite einer Stirnseite des Stapelabschlusselements 3 umgreifen, so wie es beispielhaft in den Figuren 1 und 2 dargestellt ist.

Die Stirnseite des Stapelabschlusselements 3 ist im vorliegenden Ausführungsbeispiel durch einen umlaufenden abgewinkelten Rand des Stapelabschlusselements 3 gebildet, wobei die Stirnseite des Stapelabschlusselements 3 parallel zur Stirnseite des Gehäuses 2 und in Stapelrichtung s verläuft.

Das Stapelabschlusselement 3 begrenzt dabei den Brennstoffzellenstapel 1 in Form einer oberen Endplatte stirnseitig. Alternativ kann das Gehäuse 2 auch als ein zweiseitig offenes Gehäuse 2 ausgebildet sein, wobei der Brennstoffzellenstapel 1 zwei Stapelabschlusselemente 3 aufweist, so dass eines der Stapelabschlusselemente 3 eine obere Stirnseite des Brennstoffzellenstapels 1 und das andere der Stapelabschlusselemente 3 eine untere Stirnfläche des Brennstoffzellenstapels 1 in Form einer unteren Endplatte begrenzt (nicht dargestellt). Besonders bevorzugt bildet dabei die obere Endplatte den Deckel und die untere Endplatte den Boden des Gehäuses 2.

Besonders bevorzugt ist das Stapelabschlusselement 3 einteilig im Kunststoff-Spritzgussverfahren als Metall-Kunststoff-Hybridbauteil hergestellt. Die Ausbildung des Stapelabschlusselements 3 als Metall-Kunststoff-Hybridbauteil ermöglicht damit die Kombination positiver Eigenschaften zweier verschiedener Werkstoffe. Mittels des Metallteils sind dabei Verspannkräfte großflächig in die Brennstoffzelleneinheiten einleitbar und Anbindungspunkte zu Tragstrukturen, z.B. Fahrzeugkarosserie, realisierbar. Zudem sind eine Form- und Temperaturstabilität des Metallteils sehr gut. Als Metallwerkstoff eignet sich dabei auch eine metallische Legierung, wie z.B. Stahl.

Mittels eines an das Metallteil angeformten Versteifungsteils ist eine elektrische Isolation des Brennstoffzellenstapels 1 gegen die Umwelt realisierbar. Weiterhin ist mittels des Versteifungsteils eine Schnittstelle zu einem Gehäuse 2 des Brennstoffzellenstapels 1, eine Ab- und Zuleitung gasförmiger oder flüssiger Medien aus beziehungsweise in den Brennstoffzellenstapel 1 sowie eine Isolation von Medien sowohl elektrisch als auch zum Schutz vor Korrosion realisierbar. Das Versteifungsteil optimiert damit das Metallteil. Als Kunststoff bzw. organisches Polymer eignet sich insbesondere ein Thermoplast.

Um das Stapelabschlusselement 3, dessen Stirnseite wie im vorliegenden Ausführungsbeispiel dargestellt von der Stirnseite des Gehäuses 2 umschlossen wird, gegenüber dem Gehäuse 2 abzudichten, weist der Brennstoffzellenstapel 1 das Rahmenelement 4 auf, welches auf der Stirnseite des Stapelabschlusselements 3 und der Stirnseite des Gehäuses 2 form-, kraft- und/oder stoffschlüssig befestigt ist.

Das Rahmenelement 4 weist ein U-förmiges Profil auf, wobei zwischen den Schenkeln zwei parallel zueinander angeordnete Dichtungen 5 angeordnet sind, welche jeweils ein U-förmiges Profil aufweisen.

Eine der Dichtungen 5 umschließt dabei die Stirnseite des Stapelabschlusselements 3 und die andere der Dichtungen 5 die Stirnseite des Gehäuses 2, wobei eine Länge der Schenkel des U-förmigen Profils der Dichtung 5, welche die Stirnseite des Stapelabschlusselements 3 umgreift, mit einer Länge der abgewinkelten Stirnseite des Stapelabschlusselements 3 korrespondiert.

Eine Länge der Schenkel des U-förmigen Profils der Dichtung 5, welche die Stirnseite des Gehäuses 2 umgreift, ist dabei vorbestimmbar, so dass diese Stirnseiten von Gehäusen 2 mit unterschiedlicher Höhe eines bestimmten Höhenbereichs aufnehmen kann. Dabei ist vorgesehen, dass die Stirnseite eines Gehäuses 2 dessen Höhe in einem minimalen Bereich des bestimmten Höhenbereichs liegt, nicht den Steg des Schenkels des U-förmigen Profils der Dichtung 5 berührt und die Stirnseite eines Gehäuses 2 dessen Höhe in einem maximalen Bereich des bestimmten Höhenbereichs liegt, den Steg des Schenkels des U-förmigen Profils der Dichtung 5 berühren kann, wobei eine ausreichende Überdppung zwischen den Dichtungen 5 und dem Gehäuse 2 sichergestellt ist.

Damit sind ein Formschluss und eine Abdichtung des Stapelabschlusselements 3 gegenüber dem Gehäuse 2 auch bei großen Höhentoleranzen sichergestellt in vorteilhafter Art und Weise möglich. Vorzugsweise sind somit Gehäuse 2 mit standardisierten Höhen verwendbar, so dass ein Montageaufwand des Brennstoffzellenstapels 1 kosten- und zeiteffizient gestaltet werden kann. Darüber hinaus ist eine Gewichtsreduzierung des Brennstoffzellenstapels 1 möglich, so dass in gewinnbringender Weise eine Gewichtsreduzierung eines mit Brennstoffzellen betriebenen Fahrzeugs und damit eine Energieeinsparung während eines Betriebs des Fahrzeugs möglich ist.

Die Dichtungen 5 sind beispielsweise an die Innenflächen des Rahmenelements 4 angespritzt und damit in einfacher Art und Weise herstellbar. Alternativ dazu sind die Dichtungen 5 zwischen die Schenkel des Rahmenelements 4 eingelegt und zusätzlich verklebt. Für eine optimale dichtende Wirkung sind die Dichtungen 5 aus einem Kautschuk, einem Schaumstoff, Polyvinylchlorid, thermoplastischen Polyurethan und/oder einem thermoplastischen Polymer gebildet. Diese elektrisch isolierenden Werkstoffe zeichnen sich durch eine hohe chemische Beständigkeit. Temperaturbeständigkeit und gute Korrosionseigenschaften aus.

Das Rahmenelement 4 ist vorzugsweise aus einem Kunststoff, wie z.B. einem organischen Polymer, gefertigt und wird zweckmäßigerweise während der Montage des Brennstoffzellenstapels 1 formschlüssig auf die Stirnseiten des Stapelabschlusselements 3 und des Gehäuses 2 aufgesetzt, wobei dieser Formschluss durch Kraft- und/oder Stoffschluss derart unterstützt wird, dass eine mechanisch stabile Verbindung zwischen dem Rahmenelement 4 und dem Stapelabschlusselement 3 sowie dem Gehäuse 2 sichergestellt ist. Im vorliegenden Ausführungsbeispiel ist das Rahmenelement 4 dazu mittels einer Schraube 6 kraftschlüssig mit dem Stapelabschlusselement 3 verschraubt. Alternativ dazu kann das Rahmenelement 4 und/oder die Dichtungen 5 mit der Stirnseite des Stapelabschlusselements 3 und/oder mit der Stirnseite des Gehäuses 2 verklebt sein.

Eine zweite, alternative Ausgestaltung der Erfindung wird in Figur 2 gezeigt, in der die in Richtung des Gehäuses 2 weisende Oberflächenseite der Stirnseite des Stapelabschlusselements 3 mit einer Dichtung 5 versehen ist.

Im vorliegenden Ausführungsbeispiel ist die Dichtung 5 aus einer Mehrzahl von umlaufenden Lippendichtungen 5.1 gebildet, welche beispielsweise auf die Oberflächenseite der Stirnseite des Stapelabschlusselements 3 angespritzt sind. Alternativ können die Lippendichtungen 5.1 auch mit dem Stapelabschlusselement 3 verklebt sein. In einer weiteren alternativen Ausführungsform ist die Dichtung 5 als eine Mehrzahl von Ringdichtungen oder auch als eine einteilige umlaufende Dichtung ausgeführt.

Die Lippendichtungen 5.1 sind vorzugsweise aus dem gleichen Werkstoff wie die Dichtungen 5 gemäß des ersten Ausführungsbeispiels der Erfindung gebildet.

Vorzugsweise weisen die Lippendichtungen 5.1 Aussparungen zur Aufnahme einer nicht gezeigten Spannvorrichtung auf, wobei die Spannvorrichtung zumindest im Bereich der Aussparungen elektrisch isoliert ist. Mittels der Spannvorrichtung sind die Stapelabschlusselemente 3 und das Gehäuse 2 im montierten Zustand des Brennstoffzellenstapels 1 gegeneinander verspannt, da die Spannvorrichtung Zugkräfte für die Verspannung des Brennstoffzellenstapels 1 über diesen an die in dem Gehäuse 2 gestapelten Brennstoffzelleneinheiten und an das Stapelabschlusselement 3 überträgt.

Die Lippendichtungen 5.1 und die elektrisch isolierte Spannvorrichtung wirken in vorteilhafter Art und Weise dichtend zusammen und verhindern somit ein Eindringen von Feuchtigkeit in den Bereich zwischen Brennstoffzellenstapel 1 und Gehäuse 2. Die Kombination von Spannvorrichtung zum Verspannen des Brennstoffzellenstapels 1 und Abdichtung des Stapelabschlusselements 3 gegenüber dem Gehäuse 2 ermöglicht weiterhin eine einfache und kostengünstige Herstellung eines Dichtsystems für den Brennstoffzellenstapel 1 und zudem eine Bauraumeinsparung. Zur elektrischen Isolierung der Spannvorrichtung ist dabei an diese eine Isolierung angeformt, vorzugsweise angespritzt, z.B. mittels eines Spritzgussverfahrens.

Beim Anordnen des Gehäuses 2 an dem Brennstoffzellenstapel 1, d.h. beim Aufschieben des Gehäuses 2 in Stapelrichtung s, wird eine entsprechende Dichtwirkung erzielt, wenn die dem Stapelabschlusselement 3 zugewandte Oberflächenseite der Stirnseite des Gehäuses 2 an der Dichtung 5 entlang gleitet, bis das Gehäuse 2 eine Endposition erreicht. Zur Verbesserung eines daraus resultierenden Anpressdrucks ist das Rahmenelement 4 nahezu formschlüssig auf den Stirnseiten des Stapelabschlusselements 3 und des Gehäuses 2 angeordnet und wirkt damit zweckmäßigerweise als Klemmrahmen 4.1. Das als Klemmrahmen 4.1 ausgebildete Rahmenelement 4 kann dabei einteilig oder mehrteilig ausgeführt sein.

Im vorliegenden Ausführungsbeispiel ist der Klemmrahmen 4.1 mittels einer Schraube 6 kraftschlüssig mit dem Stapelabschlusselement 3 verschraubt. Alternativ dazu kann der Klemmrahmen 4.1 mit dem Stapelabschlusselement 3 und/oder dem Gehäuse 2 verklebt sein. In einer weiteren Alternative ist es auch möglich, die Innenseiten des Klemmrahmens 4.1 mit entsprechenden Anlageprofilen zu versehen, mittels derer der Klemmrahmen 4.1 in Position gehalten wird.

Zur Sicherstellung einer zeit- und aufwandsoptimalen Montage des Klemmrahmens 4.1 weisen dessen Schenkel an deren freien Enden Einlaufschrägen auf.

## Patentansprüche

1. Brennstoffzellenstapel (1), welcher aus einer Mehrzahl von gestapelten Brennstoffzelleneinheiten und zumindest einem Stapelabschlusselement (3) gebildet ist, wobei die gestapelten Brennstoffzelleneinheiten von einem Gehäuse (2) umschlossen sind,
**gekennzeichnet durch** ein Rahmenelement (4), welches auf das zumindest eine Stapelabschlusselement (3) und das Gehäuse (2) stirnseitig angeordnet ist, wobei zumindest zwischen dem Stapelabschlusselement (3) und dem Gehäuse (2) im Bereich des Rahmenelements (4) wenigstens eine Dichtung (5) angeordnet ist.

2. Brennstoffzellenstapel (1) nach Anspruch 1,
**dadurch gekennzeichnet, dass** das Rahmenelement (4) auf einer Stirnseite des Stapelabschlusselements (3) und einer Stirnseite des Gehäuses (2) form-, kraft- und/oder stoffschlüssig befestigt ist.

3. Brennstoffzellenstapel (1) nach Anspruch 2,
**dadurch gekennzeichnet, dass** die Stirnseite des Stapelabschlusselements (3) durch einen umlaufenden abgewinkelten Rand des Stapelabschlusselements (3) gebildet ist, wobei die Stirnseite des Stapelabschlusselements (3) parallel zur Stirnseite des Gehäuses (2) in Stapelrichtung verläuft.

4. Brennstoffzellenstapel (1) nach einem der vorhergehenden Ansprüche,
**dadurch gekennzeichnet, dass** das Rahmenelement (4) ein U-förmiges Profil aufweist.

5. Brennstoffzellenstapel (1) nach Anspruch 4,
**dadurch gekennzeichnet, dass** eine Länge der Schenkel des U-förmigen Profils mit einer Länge der abgewinkelten Stirnseite des Stapelabschlusselements (3) korrespondiert.

6. Brennstoffzellenstapel (1) nach Anspruch 5,
**dadurch gekennzeichnet, dass** zwischen den Schenkeln zwei parallel zueinander angeordnete Dichtungen (5) angeordnet sind, welche jeweils ein U-förmiges Profil aufweisen, wobei eine der Dichtungen (5) die Stirnseite des Stapelabschlusselements (3) und die andere der Dichtungen (5) die Stirnseite des Gehäuses (2) umschließt.

7. Brennstoffzellenstapel (1) nach Anspruch 6,
**dadurch gekennzeichnet, dass** die U-förmigen Profile der Dichtungen (5) korrespondierend zu einer Form und/oder äußeren Abmessungen der Stirnseiten des Stapelabschlusselements (3) und des Gehäuses (2) ausgebildet sind.

8. Brennstoffzellenstapel (1) nach einem der Ansprüche 2 bis 4,
**dadurch gekennzeichnet, dass** die in Richtung des Gehäuses (2) weisende Oberflächenseite der Stirnseite des Stapelabschlusselements (3) mit einer Dichtung (5), insbesondere einer Mehrzahl von Lippendichtungen (5.1), versehen ist.

9. Brennstoffzellenstapel (1) nach Anspruch 8,
**dadurch gekennzeichnet, dass** die Dichtung (5) Aussparungen zur Aufnahme einer Spannvorrichtung aufweist, wobei die Spannvorrichtung zumindest im Bereich der Aussparungen elektrisch isoliert ist.

10. Brennstoffzellenstapel (1) nach einem der vorhergehenden Ansprüche,
**dadurch gekennzeichnet, dass** die Dichtungen (5) aus einem Kautschuk, einem Schaumstoff, Polyvinylchlorid, thermoplastischen Polyurethan und/oder einem thermoplastischen Polymer gebildet sind.

## Claims

1. Fuel cell stack (1) which is formed from a plurality of stacked fuel cell units and at least one stack terminating element (3), wherein the stacked fuel cell units are enclosed by a housing (2),
**characterised by** a frame element (4) which is arranged on the end side of the at least one stack terminating element (3) and the housing (2), wherein at least one seal (5) is arranged between the stack terminating element (3) and the housing (2) in the region of the frame element (4).

2. Fuel cell stack (1) according to claim 1,
**characterised in that** the frame element (4) is fixed on an end side of the stack terminating element (3) and on an end side of the housing (2) in a shape-locking, force-locking and / or material-locking way.

3. Fuel cell stack (1) according to claim 2,
**characterised in that** the end side of the stack terminating element (3) is formed by a surrounding angled edge of the stack terminating element (3), wherein the end side of the stack terminating element (3) extends parallel to the end side of the housing (2) in the stacking direction.

4. Fuel cell stack (1) according to one of the preceding claims,
**characterised in that** the frame element (4) has a U-shaped profile.

5. Fuel cell stack (1) according to claim 4,
**characterised in that** a length of the legs of the U-shaped profile corresponds to a length of the angled end side of the stack terminating element (3).

6. Fuel cell stack (1) according to claim 5,
**characterised in that** two seals (5) lying parallel to each other are arranged between the legs, the seals (5) have a U-shaped profile, wherein one of the seals (5) encloses the end side of the stack terminating element (3) and the other one of the seals (5) encloses the end side of the housing (2).

7. Fuel cell stack (1) according to claim 6,
**characterised in that** the U-shaped profiles of the seals (5) are formed corresponding to a shape and / or external dimensions of the end sides of the stack terminating element (3) and the housing (2).

8. Fuel cell stack (1) according to one of claims 2 to 4,
**characterised in that** the surface side, pointing towards the housing (2), of the end side of the stack terminating element (3) is provided with a seal (5), in particular a plurality of lip seals (5.1).

9. Fuel cell stack (1) according to claim 8,
**characterised in that** the seal (5) has recesses to receive a clamping device, wherein the clamping device is electrically insulated at least in the region of the recesses.

10. Fuel cell stack (1) according to one of the preceding claims,
**characterised in that** the seals (5) are formed from a rubber, a foam, polyvinyl chloride, thermoplastic polyurethane and / or a thermoplastic polymer.

## Revendications

1. Empilement de piles à combustible (1) qui est formé à partir d'une pluralité d'unités de pile à combustible empilées et d'au moins un élément de fermeture d'empilement (3), les unités de pile à combustible étant entourées par un boîtier (2), **caractérisé par** un élément de cadre (4) qui est disposé sur la face sur au moins un élément de fermeture d'empilement (3) et le boîtier (2), au moins un joint d'étanchéité (5) étant disposé entre l'élément de fermeture d'empilement (3) et le boîtier (2) dans la zone de l'élément de cadre (4).

2. Empilement de piles à combustible (1) selon la revendication 1, **caractérisé en ce que** l'élément de cadre (4) est fixé sur une face de l'élément de fermeture d'empilement (3) et sur une face du boîtier (2) par assemblage positive, par collage et/ou de force.

3. Empilement de piles à combustible (1) selon la revendication 2, **caractérisé en ce que** la face de l'élément de fermeture d'empilement (3) est formée par un bord coudé périphérique de l'élément de fermeture d'empilement (3), la face de l'élément de fermeture d'empilement (3) s'étendant parallèlement à la face du boîtier (2) dans la direction d'empilement.

4. Empilement de piles à combustible (1) selon l'une quelconque des revendications précédentes, **caractérisé en ce que** l'élément de cadre (4) présente un profil en forme de U.

5. Empilement de piles à combustible (1) selon la revendication 4, **caractérisé en ce qu'**une longueur des côtés du profil en forme de U correspond à une longueur de la face coudée de l'élément de fermeture d'empilement (3).

6. Empilement de piles à combustible (1) selon la revendication 5, **caractérisé en ce qu'**entre les côtés sont disposés deux joints d'étanchéité (5) parallèles entre eux, qui présentent respectivement un profil en forme de U, l'un des joints d'étanchéité (5) entourant la face de l'élément de fermeture d'empilement (5) et l'autre joint d'étanchéité (5) la face du boîtier (2).

7. Empilement de piles à combustible (1) selon la revendication 6, **caractérisé en ce que** les profilés en forme de U des joints d'étanchéité (5) sont formés de manière à correspondre à une forme et/ou à des dimensions extérieures des faces de l'élément de fermeture d'empilement (3) et du boîtier (2).

8. Empilement de piles à combustible (1) selon l'une quelconque des revendications 2 à 4, **caractérisé en ce que** le côté de surface de la face de l'élément de fermeture d'empilement (3) orienté dans la direction du boîtier (2) est pourvue d'un joint d'étanchéité (5), en particulier d'une pluralité de joints à lèvres (5.1).

9. Empilement de piles à combustible (1) selon la revendication 8, **caractérisé en ce que** le joint d'étanchéité (5) présente des évidements destinés à loger un dispositif de serrage, le dispositif de serrage étant isolé électriquement au moins dans la zone des évidements.

10. Empilement de piles à combustible (1) selon l'une quelconque des revendications précédentes, **caractérisé en ce que** les joints d'étanchéité (5) sont formés à partir d'un caoutchouc, d'une mousse, d'un polychlorure de vinyle, d'un polyuréthane thermoplastique et/ou d'un polymère thermoplastique.
